# EUROPEAN PATENT SPECIFICATION

(11) **EP 2 024 450 B1**
(45) Date of publication and mention of the grant of the patent: **02.11.2011**
(21) Application number: 07724743.5
(22) Date of filing: 30.04.2007
(51) Int. Cl.: C09D 11/00

(54) **AQUEOUS CARBON BLACK FORMULATIONS FOR INK JET**
WÄSSRIGE RUSSFORMULIERUNGEN FÜR INKJET
FORMULATIONS AQUEUSES DE NOIR DE CARBONE POUR IMPRESSION JET D'ENCRE

(30) Priority: 13.05.2006 DE 102006022450
(43) Date of publication of application: 18.02.2009
(73) Proprietor: LANXESS Deutschland GmbH, 51369 Leverkusen (DE)
(72) Inventor: SOMMERMANN, Thomas, 51467 Bergisch Gladbach (DE); HERRMANN, Udo, 41541 Dormagen (DE)
(86) International application number: PCT/EP2007/003816
(87) International publication number: WO 2007/131624

(56) References cited:
- EP-A- 0 735 120
- EP-A- 1 176 177
- EP-A2- 0 819 737
- WO-A-91/10710
- US-A1- 2004 118 320

## Description

The invention relates to aqueous carbon black formulations, inks based thereon, process for their production and their use for printing sheetlike or three-dimensional substrates using ink jet processes.

Carbon black used as a black pigment offers significantly higher ozone and light resistance than dye mixtures. However, impeccable dispersion of the pigment particles is an absolute condition for trouble-free use and for stable storage. Printability on different printers has to be ensured by setting a suitable viscosity, and start-of-print performance likewise needs to be impeccable.

A further important point is compatibility with water-soluble solvents which are generally co-included in ink-finishing systems to prevent flocculation.

US-A 5 085 698 and US-A 5 320 668 were the first patents to address the use of pigment carbon blacks in ink jet inks. They describe the use of water-soluble acrylates as dispersants.

EP-A-735120 discloses polymer resin containing inks containing black colorants with IR-absorpion properties for IR-laser scanner, whereby as colorants different nigrosines and carbon black are mentioned.

US2004/01183320 A1 discloses cationic pigmented inks containing a pigment and a cationic dye as dispersant.

EP-819737 A2 discloses ink compositions containing oxidized carbon black that contains acid groups. Optionally cationic additives such as basic dyes or cationic surfactants can be present.

EP 1 176 177 A2 discloses a set of two inks wherein the first ink may contain black colorants and the second inks contains a certain herterocylic dye.

WO-A-91/10710 discloses inks containing black pigments a polymer carrier and a black dye, which must be soluble in the polymeric carrier and therefore consequently has to be non-ionic.

Other dispersant systems consist of a mixture of functionalized polyether-polyols and condensed arylsulfonic acids as described in DE 19 801 759 A1.

These dispersions are partly sensitive to water-soluble solvents which can likewise adsorb onto the pigment. These include for example alkyl polyglycol ethers having alkyl radicals > 2 carbon atoms and < 8 carbon atoms, the polyethylene glycol radical comprising 1 to 6 ethylene glycol units or I-3 propylene glycol units.

A further approach is to functionalize the pigments with dispersing groups, as in US-A 5 554 739 and US-A 5 922 118 for example. However, these solvent-stable dispersions have the disadvantage of an increased tendency to migrate and the associated lower water fastness.

It has now been found that, surprisingly, a carbon black dispersion containing a specific sulphonated black condensation dye overcomes these disadvantages.

The invention accordingly provides aqueous carbon black formulations containing
a) at least one carbon black and
b) at least one neutralized sulphation product of the reaction product of nitrobenzene and aniline in the presence of iron(II) chloride, characterized in that the formulation consists of
more than 90% by weight, preferably more than 95% by weight and in particular more than 99% by weight of components a), b) and aqueous medium.

Preferred carbon blacks for component a) are types having a pH of < 4.5 in a 5% aqueous slurry, such as Spezialschwarz^{®} 4, Spezialschwarz^{®} 4a, Spezialschwarz^{®} 5, Spezialschwarz^{®} 6, Spezialschwarz^{®}100, Spezialschwarz^{®} 250, Spezialschwarz^{®} 350 or Spezialschwarz^{®} 550 from Degussa and also pigment grade carbon blacks of the types FW 200, FW 2, W 2V, FW 285, FW₁, FW 18, S 160, S 170 or of the Printex types V, 140U from Degussa.

Component b) shall herein be referred to as Acid Black 2.

The degree of sulphation of Acid Black 2 is preferably in the range from 15% to 25% by weight.

The reaction of nitrobenzene and aniline is preferably carried out at a temperature in the range from 170 to 190°C in the presence of iron(II) chloride, in particular during 10 to 20 hours.

The sulphation is preferably effected using sulphating agents such as sulphuric acid, oleum, chlorosulphonic acid, amidosulphonic acid or SO₃. Preference is given to 96% sulphuric acid, in particular at a temperature of 95-97°C, or 5-30% oleum, in particular at a temperature of 0-20°C and preferably at 8-12°C.

For example, a sulphation with 96% sulphuric acid preferably takes 0.5-3 h, in particular I-1.5 hours, while a sulphation with 20% oleum preferably takes 12 hours. The sulphation product thus obtained is then neutralized.

Neutralization is preferably carried out using lithium hydroxide, sodium hydroxide, potassium hydroxide, ammonium hydroxide and also water-soluble amines such as ethanolamine, diethanolamine, triethanolamine, methyldiethanolamine, N,N'-dimethylaminoethanol, propanolamine, butanolamine or aminomethylpropanolamine.

The carbon black formulation of the present invention is preferably a carbon black dispersion.

The aqueous medium is preferably present in an amount of 1% to 88% and in particular of 5-60% by weight, based on the formulation. The aqueous medium is either water alone or a mixture of water with organic solvents, these organic solvents preferably having a water-solubility of more than 5 g/l at 20°C.

The carbon black formulation of the present invention comprises preferably less than 0.5% by weight and in particular less than 0.2% by weight of salt, based on the formulation.

The carbon black formulation preferably contains 3-50% by weight and in particular 5% to 45% by weight of component a).

It is preferable to use 5-35% by weight and in particular 8-25% by weight of component b), based on the formulation.

Useful organic solvents include:
Aliphatic C₁-C₄ alcohols, linear or branched, pentanediol, aliphatic ketones such as acetone, methyl ethyl ketone, diacetone alcohol, polyols such as ethylene glycol, diethylene glycol, triethylene glycol, polyglycols having a molar mass of 200-2000 g/mol, propylene glycol, dipropylene glycol, tripropylene glycol, trimethylolpropane, glycerol, thiodiglycol, 2-pyrrolidone, N-methylpyrrolidone, N-ethylpyrrolidone, 1,3-dimethylimidazolidinone, dimethylacetamide and also dimethylformamide.

Mixtures of the solvents mentioned are also contemplated.

The amount of organic solvent is preferably 0-50% by weight and in particular 0-35% by weight. The pigment formulation may further comprise agents for setting the viscosity, for example polyvinyl alcohol, polyvinylpyrrolidone, methylcellulose, xanthans, provided they have no adverse effect on stability, printing performance and drying performance on paper.

To set the pH, the pigment formulation may contain pH regulators such as NaOH, KOH, aminoethanol, aminomethylpropanol, triethanolamine, N,N-dimethylaminoethanol, diethanolamine or methyldiethanolamine.

The carbon black formulation may further be freed of coarse particles, preferably by means of a 1-10 µm membrane or of a glass filter.

The invention further provides a process for producing carbon black formulations according to Claim 1, characterized in that components a) and b) are conjointly homogenized in an aqueous medium, preferably water.

To homogenize the formulation, the individual components are preferably beaten up in a dissolver and subsequently ground in a high energy bead mill using zirconium oxide beads for example.

The formulation is generally filtered thereafter, for example through 1-10 µm membrane or glass fibre filters.

The pigment formulations of the present invention exhibit excellent stability in storage and provide print of high optical density and excellent crispness both on thermal bubble jet printers (HP, Canon, Encad) and piezo printers (Epson, Mutoh).

Preferred aqueous inks are, i.e. present invention carbon black formulations containing at least one solvent described above. The inks of the present invention preferably contain less than 10% by weight and in particular less than 6% by weight of the two components a) and b).

The invention further provides for the use of the present invention's carbon black formulations or inks for printing sheetlike or three-dimensional substrates using ink jet processes.

Table 1 shows the constancy of the optical densities on various papers and using various amounts of Acid Black 2.

The optical density of the prints was determined with a measuring instrument from QEA= Quality Engineering Associates Inc.

### Examples

### Preparation of Acid Black 2

### a) Reaction product of nitrobenzene and aniline

Nitrobenzene (12 mol), aniline (17 mol) and iron(II) chloride (2 mol) are reacted at about 180°C for 16 h. The solution of nigrosine melt in an excess of aniline is then poured onto dilute aqueous sodium hydroxide solution and stirred in. The aqueous phase takes up the iron salts; the nigrosine base is recovered from the organic phase by distillative removal and drying. The solid thus recovered is hereinbelow referred to as Solvent Black 7.

### b) Sulphation

A 50 l stirred vessel is charged with 16.3 l of 96% sulphuric acid. 10 kg of Solvent Black 7 are added a little at a time with stirring.

The temperature is maintained at 90°C until everything has dissolved.

A dilution vessel is charged with 185 l of completely ion-free water and the reaction mixture is added such that the temperature is 70-80°C. The product is isolated on a filter press (crude nigrosine).

26 kg of water and 1.85 l of 50% aqueous sodium hydroxide solution are introduced into a stirred vessel and admixed with 33.3 kg of crude nigrosine by stirring. The solution thus obtained contains Acid Black 2.

### c) Purification of Acid Black 2

The solution is filtered through a 25 µm filter.

This solution is adjusted to the desired concentration with completely ion-free water and is desalted in a pressure permeation system to a salt content of less than 0.5%. This nigrosine is used as a dispersant in the examples which follow.

### Base liquid for printing tests using pigment inks:

15% of 1.5-pentanediol
10% of polyethylene glycol 200
5% of 2-pyrrolidone
70% of completely ion-free water

The homogenized carbon black dispersions are adjusted to a pigment content of 5% by diluting with the base liquid and are then printed up.

### Example 1

**Table 1 OD =optical density**

| Carbon black content^{*} | Acid Black 2^{**} | OD on HP Bright white^{***} | OD on HP Premium^{****} |
|---|---|---|---|
| 18% | 2% | 1.5 | 1.63 |
| 18% | 3% | 1.5 | 1.63 |
| 18% | 4% | 1.5 | 1.63 |

| | | | |
|---|---|---|---|
| * based on carbon black dispersion ** based on carbon black dispersion *** 80 g/m² paper from HP **** 100 g/m² paper one side surface-coated from HP | | | |

The inks produced from the carbon black dispersions of the present invention were printed up using an HP 6122 ink jet printer.

### Example 2

A 20 litre vessel is charged with 1 l 990 g of completely ion-free water, 2660 g of the Acid Black 2 solution obtained according to the above prescription c), having a solids content of 30.0%, and 300 g of ethanolamine. This mixture is homogenized with a dissolver for 15 minutes. 5000 g of Spezialschwarz S4 carbon black (Degussa) are added a little at a time with stirring.

This dispersion is circuit ground on a Drais V-15 bead mill for 7 hours, the flow rate being 260 kg/hour. Bead diameter is between 0.7 and 0.9 mm. The product is filtered through 10 µm plate filters.

The base liquid is used to produce an ink having a 5% pigment content, which is printed up on 180 g/m² premium paper using an Encad Novajet^{®} 700. The optical density is found to be 1.6.

### Example 3

In a 5 litre vessel, 2570 g of completely ion-free water, 400 g of Acid Black 2 solution obtained according to the above prescription c) and having a solids content of 30% and 30 g of ethanolamine are beaten up and homogenized with a dissolver. 750 g of Farbruß FW2 carbon black from Degussa are added a little at a time with stirring.

This dispersion is ground on a Drais V-15 bead mill at a flow rate of 150 l/h for 1.5 hours and finally filtered through 1.2 µm.

The base liquid is used to produce an ink having a 5% pigment content which is printed up on an Epson C-82.

HP Bright white paper gives an optical density of 1.4.

HP Premium paper gives an optical density of 1.45.

### Example 4

In a 5 litre vessel, 1818 g of completely ion-free water, 400 g of Acid Black 2 solution obtained according to the above prescription c) and having a solids content of 30% and 30 g of ethanolamine are beaten up and homogenized with a dissolver. 750 g of Spezialruß S 6 carbon black are added a little at a time with stirring.

This dispersion is ground on a Drais V-15 bead mill at a flow rate of 150 1/h for 2 hours and finally filtered through 1.2 µm.

The base liquid is used to produce an ink having a 5% pigment content which is printed up on an HP Deskjet^{®} 1280.

HP Bright white paper gives an optical density of 1.32.

HP Premium paper gives an optical density of 1.5.

## Claims

1. Aqueous carbon black formulation containing
a) at least one carbon black and
b) at least one neutralized sulphation product of the reaction product of nitrobenzene and aniline in the presence of iron(II) chloride,
**characterized in that** the formulation consists of more than 90% by weight, preferably more than 95% by weight and in particular more than 99% by weight of components a), b) and aqueous medium.

2. Aqueous carbon black formulation according to Claim 1, **characterized in that** the salt content is less than 0.5% by weight and in particular less than 0.2% by weight, based on the formulation.

3. Aqueous carbon black formulation according to Claim 1, **characterized in that** it contains 3% to 50% by weight and preferably 5% to 45% by weight of component a).

4. Aqueous carbon black formulation according to Claim 1, **characterized in that** it contains 5% to 35% by weight and preferably 8% to 25% by weight of component b).

5. Process for producing carbon black formulation according to Claim 1, **characterized in that** components a) and b) are conjointly homogenized in an aqueous medium.

6. Use of the carbon black formulations according to Claim 1 for printing sheetlike or three-dimensional substrates using ink jet processes.

## Patentansprüche

1. Wässrige Rußpräparation enthaltend
a) wenigstens einen Ruß und
b) wenigstens ein neutralisiertes Sulfatierungsprodukt des Umsetzungsproduktes von Nitrobenzol und Anilin in Gegenwart von Eisen(II)-chlorid,
**dadurch gekennzeichnet, dass** die Präparation aus mehr als 90 Gew.-%, vorzugsweise mehr als 95 Gew.-%, insbesondere mehr als 99 Gew.-% der Komponenten a), b) und wässrigem Medium besteht.

2. Wässrige Rußpräparation gemäß Anspruch 1, **dadurch gekennzeichnet, dass** der Salzgehalt kleiner 0,5 Gew.-%, insbesondere kleiner 0,2 Gew.-%, bezogen auf die Präparation beträgt.

3. Wässrige Rußpräparation gemäß Anspruch 1, **dadurch gekennzeichnet, dass** sie 3 bis 50 Gew.-%, vorzugsweise 5 bis 45 Gew.-% der Komponente a) enthält.

4. Wässrige Rußpräparation gemäß Anspruch 1, **dadurch gekennzeichnet, dass** sie 5 bis 35 Gew.-%, vorzugsweise 8 bis 25 Gew.-% der Komponente b) enthält.

5. Verfahren zur Herstellung von Rußpräparationen gemäß Anspruch 1, **dadurch gekennzeichnet, dass** man die Komponenten a) und b) gemeinsam in einem wässrigen Medium homogenisiert.

6. Verwendung der Rußpräparationen gemäß Anspruch 1 zum Bedrucken von flächigen oder dreidimensional gestalteten Substraten mittels Ink-Jet-Verfahren.

## Revendications

1. Formulation aqueuse de noir de carbone contenant
a) au moins un noir de carbone et
b) au moins un produit de sulfatation neutralisé du produit de réaction du nitrobenzène et de l'aniline en présence de chlorure de fer(II),
**caractérisée en ce que** la formulation se compose à plus de 90 % en poids, de préférence plus de 95 % en poids, et en particulier plus de 99 % en poids des composants a), b) et d'un milieu aqueux.

2. Formulation aqueuse de noir de carbone selon la revendication 1, **caractérisée en ce que** la teneur en sels est inférieure à 0,5 % en poids et en particulier inférieure à 0,2 % en poids, rapporté à la formulation.

3. Formulation aqueuse de noir de carbone selon la revendication 1, **caractérisée en ce qu'**elle contient 3 % à 50 % en poids et de préférence 5 % à 45 % en poids de composant a).

4. Formulation aqueuse de noir de carbone selon la revendication 1, **caractérisée en ce qu'**elle contient 5 % à 35 % en poids et de préférence 8 % à 25 % en poids de composant b).

5. Procédé de préparation de la formulation de noir de carbone selon la revendication 1, **caractérisé en ce que** les composants a) et b) sont homogénéisés ensemble dans un milieu aqueux.

6. Utilisation des formulations de noir de carbone selon la revendication 1 pour imprimer des substrats en forme de feuille ou tridimensionnels en utilisant des procédés à jet d'encre.
